(19) Europäisches Patentamt
European Patent Office
Office européen des brevets

(11) EP 3 704 940 A1

(12) EUROPEAN PATENT APPLICATION
published in accordance with Art. 153(4) EPC

(43) Date of publication:
**09.09.2020 Bulletin 2020/37**

(21) Application number: **18873332.3**

(22) Date of filing: **18.10.2018**

(51) Int Cl.:
***A01N 25/04*** *(2006.01)* ***A01N 43/90*** *(2006.01)*
***A01P 7/02*** *(2006.01)*

(86) International application number:
**PCT/JP2018/038824**

(87) International publication number:
**WO 2019/087796 (09.05.2019 Gazette 2019/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.10.2017 JP 2017209304**

(71) Applicant: **Nippon Soda Co., Ltd.**
**Tokyo 100-8165 (JP)**

(72) Inventor: **MAEKAWA Takahiro**
**Makinohara-shi**
**Shizuoka 421-0412 (JP)**

(74) Representative: **Mewburn Ellis LLP**
**Aurora Building**
**Counterslip**
**Bristol BS1 6BX (GB)**

# (54) AGROCHEMICAL EMULSIFIABLE CONCENTRATE COMPOSITION

(57) An agrochemical emulsifiable concentrate composition is provided, which contains: an agrochemically active component such as acynonapyr; a nonpolar solvent; a polar solvent having a LogPow value of 1.6 or less; and a polyoxyethylene group-having nonionic surfactant, wherein the total amount of the agrochemically active component and the nonpolar solvent ranges from 1.0 to 1.6 parts by weight with respect to one part by weight of the total amount of the polar solvent having a LogPow value of 1.6 or less and the polyoxyethylene group-having nonionic surfactant, and the agrochemical emulsifiable concentrate is substantially free from an anionic surfactant. According to the agrochemical emulsifiable concentrate composition of the present invention, it is possible to obtain a good emulsifying property even in the case of diluting the agrochemical emulsifiable concentrate composition with water having a high hardness level.

EP 3 704 940 A1

Printed by Jouve, 75001 PARIS (FR)

## Description

TECHNICAL FIELD

The present invention relates to an agrochemical emulsifiable concentrate composition. More particularly, the present invention relates to an agrochemical emulsifiable concentrate composition which can exhibit a good emulsifying property even in the case of being diluted with water having a high hardness level.

Priority is claimed on Japanese Patent Application No. 2017-209304, filed on October 30, 2017 in Japan, the content of which is incorporated herein by reference.

BACKGROUND ART

An oil-based liquid formulation (agrochemical emulsifiable concentrate) formed by dissolving an active ingredient that is hardly soluble in water, in an organic solvent, and further adding an emulsifier (surfactant) thereto is used by diluting with water. In the case where an agrochemical emulsifiable concentrate is diluted with water, an emulsion state is obtained. Normal water contains divalent cation components such as $Mg^{2+}$ and $Ca^{2+}$ to some extent. The divalent cation component ionically bonds with two molecules of the anionic surfactant to form a water-insoluble adhesive substance that is called metal soap. The high hardness water contains a large amount of divalent cations, and for this reason, a large amount of metal soap is produced when dilution with the high hardness water is carried out. As a result, the emulsifying property is lowered and the oil phase and the aqueous phase are easily separated.

In general, nonionic surfactants have hydrophilic groups that do not ionize, and for this reason, nonionic surfactants are less susceptible to water hardness and electrolytes.

For example, Patent Document 1 discloses an emulsifiable concentrate obtained by mixing and dissolving 30 parts by weight of an agrochemically active ingredient, 33 parts by weight of xylene, 30 parts by weight of dimethylformamide, and 7 parts by weight of polyoxyethylene alkylallyl ether, as a formulation example. As a result of diluting the emulsifiable concentrate composition with 19° dH hardness water, the aqueous phase and the oil phase are separated.

Patent Document 2 discloses an agrochemical emulsifiable concentrate composition obtained by mixing and dissolving 12.3 parts by weight of an agrochemically active ingredient, 23 parts by weight of an aromatic hydrocarbon-based nonpolar solvent, 39.7 parts by weight of cyclohexanone, 15 parts by weight of POE tristyryl phenyl ether, and 10 parts by weight of POE oleic ester, as an example.

Patent Document 1: WO2011/105506A
Patent Document 2: WO2009/063608A

DISCLOSURE OF INVENTION

Technical Problem

An object of the present invention is to provide an agrochemical emulsifiable concentrate composition which can exhibit a good emulsifying property even in the case of being diluted with water having a high hardness level.

Solution to Problem

In order to achieve the object mentioned above, the present invention including the following modes has been completed.

[1] An agrochemical emulsifiable concentrate composition containing an agrochemically active ingredient, a nonpolar solvent, a polar solvent with a LogPow value of 1.6 or less, and a nonionic surfactant having a polyoxyethylene group, wherein a total amount of the agrochemically active ingredient and the nonpolar solvent ranges from 1.0 to 1.6 parts by weight with respect to 1 part by weight of a total amount of the polar solvent having a LogPow value of 1.6 or less and the nonionic surfactant having a polyoxyethylene group, and
an anionic surfactant is not substantially contained.

[2] The agrochemical emulsifiable concentrate composition according to [1], wherein the agrochemically active ingredient is acynonapyr.

[3] The agrochemical emulsifiable concentrate composition according to [1] or [2], wherein the polar solvent is at least one solvent selected from the group consisting of diethylene glycol monomethyl ether, N,N-dimethylformamide, dipropylene glycol n-butyl ether, cyclohexanol, cyclohexanone, butyl diglycol, tripropylene glycol methyl ether, ethanol, propylene glycol monomethyl ether, N-methyl-2-pyrrolidone, dipropylene glycol methyl ether, propylene carbonate, gamma-butyrolactone, dimethyl sulfoxide, dipropylene glycol, N-butylpyrrolidone, benzyl glycol, phenoxyethanol, phenoxypropanol, and 5-(dimethylamino) -2-methyl-5-oxopentanoic acid methyl ester.

[4] The agrochemical emulsifiable concentrate composition according to any one of [1] to [3], wherein the nonpolar solvent has a LogPow value that is larger than 1.6.

[5] The agrochemical emulsifiable concentrate composition according to any one of [1] to [4], wherein the nonionic surfactant having a polyoxyethylene group has an HLB ranging from 9 to 14.

[6] The agrochemical emulsifiable concentrate composition according to any one of [1] to [5], wherein the nonionic surfactant having a polyoxyethylene group is at least one surfactant selected from the group consisting of polyoxyethylene tridecyl ether, polyoxyethylene tristyryl phenyl ether, polyoxyethylene sorbitol tetraoleate, polyoxyethylene sorbitan ester, polyoxyethylene alkyl ether, polyoxyethylene polycyclic phenyl ether, polyoxyethylene oleic ester, polyoxyethylene polyoxypropylene alkyl ether, polyoxyethylene polyoxypropylene butyl ether, polyoxyethylene castor oil, and ethoxylated propoxylated tristyrylphenol.

Advantageous Effects of the Invention

The agrochemical emulsifiable concentrate composition of the present invention can obtain a good emulsifying property even in the case of being diluted with water having a high hardness level. It is difficult for the diluted liquid to separate into an aqueous phase and an oil phase. For this reason, the agrochemical emulsifiable concentrate composition can be applied to agricultural and horticultural crops, fields, and the like, at a uniform concentration, and in addition, it is not necessary to carry out stirring in order to make the diluted liquid uniform during application. The concentration of the applied dilution of the composition is uniform without unevenness, and for this reason, the effects of controlling harmful organisms with respect to agricultural and horticultural crops can be uniformly exhibited.

EMBODIMENTS OF THE INVENTION

The agrochemical emulsifiable concentrate composition of the present invention is an agrochemical emulsifiable concentrate composition containing an agrochemically active ingredient, a nonpolar solvent, a polar solvent, and a nonionic surfactant, and is substantially free of an anionic surfactant.

(Agrochemically active Ingredient)

The agrochemically active ingredient used in the present invention is a compound having an agrochemical activity. The compound having an agrochemical activity can be a compound registered as an agrochemical or a compound having an activity equivalent thereto. In addition, the agrochemically active ingredient is not limited in accordance with the compound form, crystal form, and the like, and may be, for example, in the form of a salt, a co-crystal composed of two or more types of agrochemically active ingredients, or a co-crystal composed of one or more types of agrochemically active ingredients and another compound. As examples of the salt, mention may be made of, for example, an alkali metal salt such as a sodium salt or a potassium salt, an alkaline earth metal salt such as a calcium salt or a magnesium salt, and the like.

As examples of the agrochemically active ingredient, mention may be made of fungicides, pesticides, acaricides, herbicides, plant growth regulators, and the like. As more specific examples of the agrochemically active ingredient, mention may be made of:

anilinopyrimidine-based fungicides such as cyprodinil, mepanipyrim, and the like;

amide-based fungicides such as isotianil, ethaboxam, cyflufenamid, thifluzamide, fenpyrazamine, fenhexamid, furametpyr, fluopicolide, fluxapyroxad, flutolanil, penthiopyrad, penflufen, boscalid, mandipropamid, metalaxyl, metalaxyl-M, mepronil, and the like;

dicarboximide-based fungicides such as iprodione, procymidone, and the like;

sterol biosynthesis inhibitors such as ipconazole, imibenconazole, oxpoconazole fumarate, difenoconazole, cyproconazole, simeconazole, tetraconazole, tebuconazole, triflumizole, triforine, fenarimol, fenbuconazole, prochloraz, propiconazole, hexaconazole, pefurazoate, myclobutanil, metconazole, and the like;

strobilurin fungicides such as azoxystrobin, kresoxim-methyl, trifloxystrobin, pyraclostrobin, pyribencarb, famoxadone, metominostrobin, fluoxastrobin, picoxystrobin, and the like;

other synthesis fungicides / fungicides derived from naturally occurring products, such as TPN (chlorothalonil), amisulbrom, ametoctrazin, iminoctadine, oxolinic acid, captan, cyazofamid, dithianon, dimethomorph, cymoxanil, ferimzone, fludioxonil, flutianil, propamocarb-hydrochloride, probenazole, pencycuron, benthiavalicarb-isopropyl, and the like;

benzimidazole-based fungicides such as diethofencarb, thiophanate methyl, and the like;
melanin biosynthesis inhibitors such as tricyclazole, pyroquilon, fthalide, and the like;
repellents / other synthetic fungicides / fungicides derived from naturally occurring products, such as iminoctadine;
antibiotic fungicides such as oxytetracycline, kasugamycin, streptomycin, validamycin, polyoxins, and the like;
insect growth regulators / other plant growth regulators / repellents / other synthetic fungicides / fungicides derived from naturally occurring products, such as isoprothiolane, and the like;
acaricides / other synthetic fungicides and/or fungicides derived from naturally occurring products, such as fluazinam;
nematicides / benzimidazole-based fungicides such as benomyl and the like;
nematicides / soil fungicides / diazine herbicides, such as dazomet and the like;
soil fungicides such as flusulfamide and the like;
organophosphorus-based fungicides such as tolclofos-methyl, fosetyl, and the like;
organic sulfur-based fungicides such as ambam, manzeb (mancozeb), maneb, and the like;
organic sulfur-based fungicides / repellents such as thiuram and the like;
triazole-based fungicides such as triticonazole and the like;
pyrazole-based fungicides such as isopyrazam, tolpyralate, and the like;
tetrazole-based fungicides such as picarbutrazox and the like;
piperidine / thiazole / isoxazoline-based fungicides such as oxathiapiprolin, and the like;
thiophene carboxamide-based fungicides such as isofetamid and the like;
dithiocarbamate-based fungicides such as propineb and the like; and
fungicides such as pyraziflumid and the like;
acetolactate synthesis-inhibiting herbicides (sulfoniaurea-based) such as azimsulfuron, imazosulfuron, ethoxysulfuron, chlorimuron-ethyl, cyclosulfamuron, thifensulfuron-methyl, trifloxysulfuron-sodium, nicosulfuron, halosulfuron-methyl, pyrazosulfuron-ethyl, flazasulfuron, flucetosulfuron, bensulfuron-methyl, foramsulfuron, metazosulfuron, iodosulfuron-methyl-sodium, rimsulfuron, and the like:

other acetolactate synthesis-inhibiting herbicides such as bispyribac-sodium, pyriftalid, pyrimisulfan, pyriminobac-methyl, florasulam, penoxsulam, and the like;
amide-based herbicides such as asulam, alachlor, isoxaben, ipfencarbazone, etobenzanid, cafenstrole, diflufenican, dimethenamid, dimethenamid-P, napropamide, butachlor, flufenacet, flupoxam, pretilachlor, propyzamide, bromobutide, metolachlor, S-metolachlor, mefenacet, and the like;
amino acid-based herbicides such as glyphosate, glufosinate, glufosinate-P, and the like;
carbamate-based herbicides such as IPC, esprocarb, pyributicarb, prosulfocarb, benthiocarb, molinate, and the like;
cyclohexanedione-based herbicides such as clethodim, sethoxydim, and the like;
dinitroaniline-based herbicides such as oryzalin, trifluralin, prodiamine, bethrosin (benfluralin), and the like;
dinitroaniline-based herbicides / other plant growth regulators such as pendimethalin and the like;
diazine-based herbicides such as terbacil, bromacil, bentazone, lenacil, and the like;
triazine-based herbicides such as atrazine, indaziflam, cyanazine, dimethametryn, simetryn, triaziflam, simazine (CAT), metamitron, and the like;
triketone-based herbicides such as tefuryltrione, benzobicyclon, mesotrione, fenquinotrione, and the like;
nitrile-based herbicides such as DBN, and the like;
pyrazole-based herbicides such as topramezone, pyrazoxyfen, pyrazolate (pyrazolynate), and the like;
phenylphthalimide-based herbicides such as chlorphthalim, and the like;
phenoxy acid-based herbicides such as 2,4-PA, DCBN, MCPB (MCPB-ethyl), MCPP (mecoprop), quizalofop-ethyl, clomeprop, cyhalofop-butyl, triclopyr, fluazifop, fluazifop-P, mecoprop-P, metamifop, fluazifop-butyl, and the like;
urea-based herbicides such as DCMU, daimuron, linuron, tebuthiuron, and the like;
other synthetic herbicides / herbicides derived from naturally occurring products, such as ACN (mecoprop-P-potassium), MDBA, indanofan, oxadiazon, oxadiargyl, oxaziclomefone, carfentrazone-ethyl, dithiopyr, pyraclonil, pyraflufen-ethyl, pyroxasulfone, fenoxasulfone, fentrazamide, butamifos , pentoxazone, benfuresate, and the like;
non-hormonal osmotic herbicides such as ethofumesate, and the like;
triazolinone-based herbicides such as amicarbazone and the like;
imidazolinone-based herbicides such as imazapyr isopropylamine salt (imazapyr), imazamox-ammonium, and the like;
pyridazinone-based herbicides such as chloridazon (PAC), and the like;
bipyridium-based herbicides such as diquat dibromide (diquat), and the like;
sulfonanilide-based herbicides such as triafamone, and the like;

herbicides such as endothal, flupropanate-sodium, and the like;
carbamate-based insecticides such as BPMC (fenobucarb), MIPC (isoprocarb), alanycarb, oxamyl, carbosulfan, thiodicarb, benfuracarb, methomyl, phenmedipham, and the like;
diamide-based insecticides such as chlorantraniliprole, cyantraniliprole, flubendiamide, and the like;
spinosyn-based insecticides such as spinetoram, spinosad, and the like;
other synthetic insecticides such as indoxacarb, indoxacarb-MP, chlorfenapyr, diafenthiuron, pymetrozine, pyridalyl, pyrifluquinazon, flonicamid, metaldehyde, metaflumizone, and the like;
neonicotinoid-based insecticides such as acetamiprid, imidacloprid, clothianidin, dinotefuran, thiacloprid, thiamethoxam, nitenpyram, and the like;
nereistoxin-based insecticides such as cartap, thiocyclam, bensultap, and the like;
pyrethroid-based insecticides such as acrinathrin, etofenprox, cyhalothrin, cypermethrin, silafluofen, tefluthrin, tralomethrin, bifenthrin, fenpropathrin, fluvalinate, permethrin, fenvalerate, and the like;
phenylpyrazole-based insecticides such as ethiprole, fipronil, and the like;
macrolide-based insecticides such as abamectin, emamectin benzoate, lepimectin, and the like;
macrolide-based insecticides / acaricides such as milbemectin, and the like;
insect growth regulators such as chromafenozide, chlorfluazuron, cyromazine, tebufenozide, teflubenzuron, novaluron, pyriproxyfen, buprofezin, flufenoxuron, methoxyfenozide, lufenuron, and the like;
acaricides such as BPPS (propargite), acequinocyl, amitraz, etoxazole, dienochlor, cyenopyrafen, cyflumetofen, spirodiclofen, spirotetramat, spiromesifen, tetradifon, tebufenpyrad, bifenazate, pyflubumide, pyridaben, pyrimidifen, fenpyroximate, hexythiazox, acynonapyr, and the like;
nematicides such as carbum sodium salt (metam-sodium), cadusafos, nemadectin, fosthiazate, morantel tartrate, and the like;
organophosphorus insecticides such as CYAP (cyanophos), DMTP (methidathion), MEP (fenitrothion), MPP (fenthion), PAP (phenthoate), acephate, isoxathion, ethylthiomethone (disulfoton), chlorpyrifos, diazinon, pirimiphos-methyl, prothiofos, profenofos, malathion, and the like;
fluoroalkylthioether-based insecticides such as fluensulfone and the like;
anthranilamide-based insecticides such as cyclaniliprole, and the like;
butenolide-based insecticides such as flupyradifurone, and the like;
quinoline-based insecticides such as flometoquin, and the like;
mating inhibitors such as diashilure (pheromone), and the like;
aminopyrimidine-based insecticides / fungicides such as diflumetorim, and the like;
pyrimidine methanol-based plant growth regulators such as flurprimidol, and the like;
triazole-based plant growth regulators such as uniconazole-P, paclobutrazol, and the like;
plant growth regulators such as hydrazinocarbonylpropenoic acid potassium salt, and the like; and the like.

In the present invention, among these agrochemically active ingredients, acynonapyr is preferably used.
Acynonapyr (compound name: (1R,5R,7S) -7- (2-propoxy-4- (trifluoromethyl) phenoxy) -9-[[5 -(trifluoromethyl) pyridin-2-yl] oxy] -9-azabicyclo [3.3.1] non-2-yne) has an acaricidal activity.
The amount of the agrochemically active ingredient used in the present invention is not particularly limited, and preferably ranges from 1 to 50% by mass, more preferably ranges from 5 to 40% by mass, and still more preferably ranges from 10 to 30% by mass, with respect to the entire agrochemical emulsifiable concentrate composition.

(Nonpolar Solvent)

The nonpolar solvent used in the present invention is not particularly limited as long as a nonpolar solvent is an organic compound that is in the form of a liquid at room temperature, and is not mixable with water or is hardly mixable with water after the agrochemically active ingredient is dissolved in the nonpolar solvent. The nonpolar solvent is added in order to form fine droplets dispersed in water. These droplets contain an agrochemically active ingredient as a solute. The nonpolar solvent used in the present invention preferably has a LogPow value that is larger than 1.6. As examples of the nonpolar solvents used in the present invention, mention may be made of xylene, ethylbenzene, octadecylbenzene, dodecylnaphthalene, tridecylnaphthalene, phenylxylylethane, decane, tridecane, tetradecane, hexadecane, octadecane, normal paraffin, isoparaffin, cycloparaffin, 1-undecene, 1-heneicocene, solvent naphtha, di-n-butyl carbonate, diisobutyl adipate, methyl laurate, and the like. Among these, solvent naphtha, xylene, di-n-butyl carbonate, diisobutyl adipate or methyl laurate are preferred.
The amount of the nonpolar solvent used in the present invention is not particularly limited as long as it can dissolve the agrochemically active ingredient. The amount of the nonpolar solvent used in the present invention is, for example, preferably in the range of from 5 to 90% by mass, more preferably in the range of from 10 to 70% by mass, and further preferably in the range of from 20 to 60% by mass, with respect to the entire agrochemical emulsificate composition.

(Polar Solvent)

The polar solvent used in the present invention has a LogPow value of 1.6 or less. A polar solvent is an organic compound that is in the form of a liquid at normal temperature, and has a property of being easily mixed with water. As examples of the polar solvents used in the present invention, mention may be made of a C1-C6 alcohol such as methanol (LogPow value: -0.82), ethanol (LogPow value: -0.32), propanol (LogPow value: 0.25), butanol (LogPow value: 0.9), pentanol (LogPow value: 1.51), cyclohexanol (LogPow value: 1.2), or the like, a C1-C6 ketone such as acetone (LogPow value: -0.24), methyl ethyl ketone (LogPow value: 0.29), cyclohexanone (LogPow value: 0.86), or the like, a C1-C6 lactam such as N-methyl-2-pyrrolidone (LogPow value: -0.38), N-butylpyrrolidone (LogPow value: 1.27), or the like, a C1-C6 lactone such as gamma-butyl lactone (LogPow value: -0.57), or the like, a C2-C6 amide such as N,N-dimethylformamide (LogPow value: -0.87), acetamide (LogPow value: -1.26), or the like, a glycol such as butyl diglycol (LogPow value: 0.56), diethylene glycol monomethyl ether (LogPow value: -1.18), dipropylene glycol (LogPow value: -1.5), propylene glycol monomethyl ether (LogPow value: -0.342), dipropylene glycol methyl ether (LogPow value: -0.46), dipropylene glycol n-butyl ether (LogPow value: 1.52), tripropylene glycol methyl ether (LogPow value: 0.309), benzyl glycol (LogPow value: 1.11), or the like, propylene carbonate (LogPow value: -0.5), dimethylsulfoxide (LogPow value: -1.35), phenoxyethanol (LogPow value: 1.2), phenoxypropanol (LogPow value: 1.51), 5- (dimethylamino) -2-methyl-5-oxopentanoic acid methyl ester (LogPow value: 0.39), and the like. Among these, diethylene glycol monomethyl ether, N,N-dimethylformamide, dipropylene glycol n-butyl ether, cyclohexanol, cyclohexanone, butyl diglycol, tripropylene glycol methyl ether, ethanol, propylene glycol monomethyl ether, N-methyl-2-pyrrolidone, dipropylene glycol methyl ether, propylene carbonate, gamma-butyrolactone, dimethylsulfoxide, dipropylene glycol, N-butylpyrrolidone, benzyl glycol, phenoxyethanol, phenoxypropanol, or 5- (dimethylamino) -2-methyl-5-oxopentanoic acid methyl ester is preferable. The LogPow value is a common logarithm of the distribution coefficient Pow to n-octanol and water (refer to JIS Z 7260-107: 2000).

$$\text{Pow} = (\text{C (concentration in a 1-octanol phase)} / \text{C (concentration in an aqueous phase)})$$

The amount of the polar solvent used in the present invention is, for example, preferably in the range of from 1 to 90% by mass, more preferably in the range of from 5 to 60% by mass, and still more preferably in the range of from 10 to 40% by mass, with respect to the entire agrochemical emulsifiable concentrate composition.

(Nonionic Surfactant)

The nonionic surfactant used in the present invention has a polyoxyethylene (POE) group as a hydrophilic group. The nonionic surfactants are hardly affected by the hardness of water used for dilution since they are not ionized even in the case of being dissolved in water. The nonionic surfactants used in the present invention can be broadly classified into the ester type nonionic surfactants obtained by bonding POE groups and carboxyl groups, the ether type nonionic surfactants obtained by ether bonding POE groups and hydroxyl groups, and the like. As examples of the ester type nonionic surfactants, mention may be made of POE sorbitan fatty acid ester, POE-sorbitol fatty acid ester, POE glycerin fatty acid esters, POE fatty acid ester, POE propylene glycol fatty acid ester and the like. As examples of the ether type nonionic surfactants, mention may be made of POE alkylphenyl ether, POE alkyl ether, POE / polyoxypropylene alkyl ether, and the like. As examples of other nonionic surfactants, mention may be made of tetra-POE / tetrapolyoxypropylene-ethylenediamine condensate, POE-castor oil derivative, POE hydrogenated castor oil derivative, POE beeswax / lanolin derivative, POE alkylamine, POE fatty acid amide, POE nonylphenyl formaldehyde condensate, and the like. As specific examples of the nonionic surfactants used in the present invention, mention may be made of polyoxyethylene tridecyl ether, polyoxyethylene tristyryl phenyl ether, polyoxyethylene sorbitol tetraoleate, polyoxyethylene sorbitan ester, polyoxyethylene alkyl ether, polyoxyethylene polycyclic phenyl ether, polyoxyethylene oleic ester, polyoxyethylene polyoxypropylene alkyl ether, polyoxyethylene polyoxypropylene butyl ether, polyoxyethylene castor oil, ethoxylated propoxylated tristyrylphenol (ETHO-PROPOXYLATED TRISTYRYLPHENOLS), and the like.

The nonionic surfactant used in the present invention has an HLB value preferably ranging from 0 to 20, and more preferably ranging from 9 to 14. The HLB (Hydrophile-Lipophile Balance) value is a value which indicates the degree of affinity of the surfactant for water and oil (an organic compound insoluble in water). The HLB value can range from 0 to 20. As the value is closer to 0, the lipophilicity becomes higher. On the other hand, as the balue is closer to 20, the hydrophilicity becomes higher.

The amount of the nonionic surfactant used in the present invention is, for example, preferably in the range of from 0.1 to 40% by mass, more preferably in the range of from 1 to 35% by mass, and still more preferably in the range of from 10 to 30% by mass, with respect to the entire agrochemical emulsifiable concentrate composition.

(Anionic Surfactant)

The agrochemical emulsifiable concentrate composition of the present invention contains substantially no anionic surfactant. Anionic surfactants have hydrophilic groups that are ionized in the case of being dissolved in water. Anionic surfactants can be broadly classified into carboxylic acid type anionic surfactants, sulfonic acid type anionic surfactants, sulfuric ester type anionic surfactants, phosphoric ester type anionic surfactants, and the like.

(Component Ratio)

In the agrochemical emulsifiable concentrate composition of the present invention, the total amount of the agrochemically active ingredient and the nonpolar solvent mentioned above ranges from 1.0 to 1.6 parts by weight, and preferably ranges from 1.0 to 1.5 parts by weight, with respect to 1 part by weight of the total amount of the polar solvent and the nonionic surfactant mentioned above. As the total amount of the agrochemically active ingredient and the nonpolar solvent mentioned above is increased, the hydrophobicity of the entire composition becomes higher, and the emulsifying property at the time of diluting with water is lowered.

(Preferable Range)

The amounts of the agrochemically active ingredient, the nonpolar solvent, the polar solvent, and the nonionic surfactant contained in the agrochemical emulsifiable concentrate composition of the present invention is not particularly limited, as long as the condition: that the total amount of the agrochemically active ingredient and the nonpolar solvent mentioned above ranges from 1.0 to 1.6 parts by weight, with respect to 1 part by weight of the total amount of the polar solvent and the nonionic surfactant mentioned above, is satisfied.

Preferably, with respect to the entire agrochemical emulsifiable concentrate composition, respectively,
the agrochemically active ingredient is in an amount ranging from 1 to 50% by mass,
the nonpolar solvent is in an amount ranging from 5 to 90% by mass,
the polar solvent is in an amount ranging from 1 to 90% by mass, and
the nonionic surfactant is in an amount ranging from 0.1 to 40% by mass.

More preferably, with respect to the entire agrochemical emulsifiable concentrate composition, respectively,
the agrochemically active ingredient is in an amount ranging from 5 to 40% by mass,
the nonpolar solvent is in an amount ranging from 10 to 70% by mass,
the polar solvent is in an amount ranging from 5 to 60% by mass, and
the nonionic surfactant is in an amount ranging from 1 to 35% by mass.

Still more preferably, with respect to the entire agrochemical emulsifiable concentrate composition, respectively,
the agrochemically active ingredient is in an amount ranging from 10 to 30% by mass,
the nonpolar solvent is in an amount ranging from 20 to 60% by mass,
the polar solvent is in an amount ranging from 10 to 40% by mass, and
the nonionic surfactant is in an amount ranging from 10 to 30% by mass.

(Other Components)

The agrochemical emulsifiable concentrate composition of the present invention can include, as other components, a pH adjuster, a colorant, an antifoaming agent, a specific gravity adjuster, an antioxidant, an ultraviolet absorber, a safener, a drift inhibitor, a mixing improver, a humectant, a spreading agent, a fixing agent, a chelating agent, fragrance, and the like. The total amount of the other components mentioned above ranges from 0 to 10% by mass, more preferably ranges from 0.01 to 10% by mass, and still more preferably ranges from 0.1 to 5% by mass, with respect to the entire agrochemical emulsifiable concentrate composition. The amount of each of the other components mentioned above preferably ranges from 0 to 5% by mass, more preferably ranges from 0.01 to 3% by mass, and still more preferably ranges from 0.1 to 1% by mass, with respect to the entire agrochemical emulsifiable concentrate composition.

The agrochemical emulsifiable concentrate composition of the present invention is not particularly limited depending on the preparation method therefor. For example, the agrochemical emulsifiable concentrate composition of the present invention can be prepared by mixing the agrochemically active ingredient, the nonpolar solvent, the nonionic surfactant, and the polar solvent at the same time. Alternatively, the agrochemical emulsifiable concentrate composition of the present invention can be prepared by adding a predetermined amount of the agrochemically active ingredient to the nonpolar solvent, dissolving to obtain a solution A, separately mixing the nonionic surfactant with the polar solvent to obtain a uniform solution B, and then mixing the solution A and the solution B.

The agrochemical emulsifiable concentrate composition of the present invention is used after the composition is diluted with water. As examples of water used for dilution, mention may be made of, for example, tap water, industrial water, well water, river water, ground water, and the like.

The WHO classifies water which has a hardness of less than 60 mg/l as soft water, classifies water which has a hardness of 60 mg/l or more and less than 120 mg/l as moderately hard water, classifies water which has a hardness of 120 mg/l or more and less than 180 mg/l as hard water, and classifies water which has a hardness of 180 mg/l or more as greatly hard water.

$$\text{Hardness [mg/l]} = (\text{calcium amount [mg/l]} \times 2.5) + (\text{magnesium amount [mg/l]} \times 4.1)$$

In addition, the Standard Waters are defined at the Collaborative International Pesticides Analytical Council Limited (CIPAC). The standard water D has a hardness of 342 ppm. The WHO standard hard water is the same as the standard water D. If the hardness of 342 ppm is converted to the German hardness, (342 ppm / 100 × 56 / 10) ≈ 19° dH.

The diluted agrochemical emulsifiable concentrate composition of the present invention, in a predetermined amount, can be applied to agricultural and horticultural crops, fields and the like. Thereby, the effect of an agrochemically active ingredient can be exhibited.

## EXAMPLES

Hereinafter, the present invention is described in more detail with reference to Examples. It should be understood that the present invention is not limited to these Examples.

Prior to the description of the Examples for the agrochemical emulsifiable concentrate compositions, evaluation methods of the agrochemical emulsifiable concentrate compositions are described.

### (Evaluation Method of Agrochemical Emulsifiable Concentrate Composition)

The agrochemical emulsifiable concentrate compositions obtained in the present Examples were evaluated as follows.

500 μl of the agrochemical emulsifiable concentrate composition was placed in a glass tube with a 100 ml volume, and 100 ml of hard water having 19° dH at 25°C was added thereto. The glass tube was overturned 30 times to obtain a uniform emulsion. The emulsified state was visually evaluated for "initial emulsification" according to the following evaluation criteria.

Evaluation criteria (Initial emulsification)

O: After overturning the glass tube 30 times, a uniform cloudy liquid was formed, and no separation or no precipitation was observed.

X: After overturning the glass tube 30 times, coarse emulsified particles were observed. Or separation was observed, and cloudiness was not exhibited.

Next, the emulsion was allowed to stand for 24 hours under the circumstance of 25°C. Again, the visual evaluation "after 24 hours" was carried out according to the following evaluation criteria.

Evaluation criteria (after 24 hours)

O: A uniform emulsified state was maintained. (Separated oil droplets were less than 0.1 mL).

Δ: Emulsion was separated, and the separated oil droplets were present in about 0.1 mL.

X: Emulsion was separated, and the separated oil droplets were present in 0.2 mL or more. Or, the oil was separated at the liquid level or the bottom.

The materials used in the Examples and the like are as follows:
Agrochemically active ingredient (A-1): ACYNONAPYR, manufactured by Nippon Soda Co., Ltd.
Nonpolar solvent (B-1): Solvent naphtha, T-SOL 150, manufactured by JXTG Energy Co., Ltd., LogPow = 3.80
Nonpolar solvent (B-2): Xylene, LogPow = 3.15
Nonpolar solvent (B-3): Di-n-butyl carbonate, JEFFSOL AG1560, manufactured by Huntsman Corporation, LogPow = 3.47
Nonpolar solvent (B-4): Diisobutyl adipate, VINICIZER 40, manufactured by Kao Corporation, LogPow = 3.70
Nonpolar solvent (B-5): Methyl laurate, EXCEPARL ML-85, manufactured by Kao Corporation, LogPow = 5.41
Polar solvent (C-1): Diethylene glycol monomethyl ether, HISOLVE DM, manufactured by TOHO Chemical Industry Co., Ltd., LogPow = -1.18
Polar solvent (C-2): N,N-dimethylformamide, LogPow = -0.87
Polar solvent (C-3): Dipropylene glycol n-butyl ether, DAWANOL DPNB, manufactured by Dow Chemical Japan Limited, LogPow = 1.52
Polar solvent (C-4): Cyclohexanol, LogPow = 1.2
Polar solvent (C-5): Cyclohexanone, LogPow = 0.86
Polar solvent (C-6): Butyl diglycol, LogPow = 0.56
Polar solvent (C-7): Tripropylene glycol methyl ether, DOWANOL TPM, manufactured by Dow Chemical Japan Limited, LogPow = 0.309
Polar solvent (C-8): Ethanol, LogPow = -0.31
Polar solvent (C-9): Propylene glycol monomethyl ether, HISOLVE MP, manufactured by Toho Chemical Industry Co., Ltd., LogPow = -0.342
Polar solvent (C-10): N-methyl-2-pyrrolidone, LogPow = -0.38
Polar solvent (C-11): Dipropylene glycol methyl ether, DAWANOL DPM, manufactured by Dow Chemical Japan Limited, LogPow = -0.46
Polar solvent (C-12): Propylene carbonate, JEFFSOL-1555, manufactured by Huntsman Corporation, LogPow = -0.5
Polar solvent (C-13): $\gamma$-Butyrolactone, LogPow = -0.566
Polar solvent (C-14): Dimethyl sulfoxide, LogPow = -1.35
Polar solvent (C-15): Dipropylene glycol, DPG, manufactured by Nippon Nyukazai Co., Ltd., LogPow = -1.5
Polar solvent (C-16): N-Butylpyrrolidone, GENEGEN NBP, manufactured by Clariant Corporation, LogPow = 1.27
Polar solvent (C-17): Triethylene glycol monomethyl ether, METHYL TRIGLYCOL, manufactured by Clariant Corporation, LogPow = -1.12
Polar solvent (C-18): Phenoxyethanol, LogPow = 1.2
Polar solvent (C-19): Phenoxypropanol, LogPow = 1.51
Polar solvent (C-20): Benzyl glycol, LogPow = 1.11
Polar solvent (C-21): 5- (Dimethylamino) -2-methyl-5-oxopentanoic acid methyl ester, RHODIASOLV POLARCLEAN, LogPow = 0.39
Polar solvent (C-22): Methyl oleate, EXOPARAL M-OL, manufactured by Kao Corporation, LogPow = 7.45
Polar solvent (C-23): Diisobutyl adipate, VINICIZER 40, manufactured by Kao Corporation, LogPow = 3.70
Polar solvent (C-24): Octanol, LogPow = 3
Polar solvent (C-25): Hexanol, LogPow = 2.03
Polar solvent (C-26): Butyl acetate, LogPow = 1.82
Polar solvent (C-27): Dibutyl diglycol, DBDG, manufactured by Nippon Nyukazai Co., Ltd., LogPow = 1.92
Polar solvent (C-28): 2-ethylhexyl diglycol, EHDG, manufactured by Nippon Nyukazai Co., Ltd., LogPow = 2
Nonionic surfactant (D-1): Polyoxyethylene tridecyl ether, Newcol NT-5, manufactured by Nippon Nyukazai Co., Ltd.
Nonionic surfactant (D-2): ETHO-PROPOXYLATED TRISTYRYLPHENOLS, manufactured by SOLVAY Corporation, Soprophor TSP / 724, CAS: 70880-56-7, HLB = 12.3
Nonionic surfactant (D-3): Polyoxyethylene tristyryl phenyl ether, Solpol T-10, manufactured by TOHO Chemical Industry Co., Ltd., HLB = 10
Nonionic surfactant (D-4): Polyoxyethylene sorbitol tetraoleate, Rheol 430, manufactured by Kao Corporation, Ltd. HLB = 10.5
Nonionic surfactant (D-5): Polyoxyethylene sorbitan ester, TWEEN 81, manufactured by CRODA Corporation, HLB = 10
Nonionic surfactant (D-6): Polyoxyethylene alkyl ether, Newcol 2305, manufactured by Nippon Nyukazai Co., Ltd., HLB = 10.5
Nonionic surfactant (D-7): Polyoxyethylene polycyclic phenyl ether, Newcol 2607, manufactured by Nippon Nyukazai Co., Ltd., HLB = 11.2

Nonionic surfactant (D-8): Polyoxyethylene oleate, FNN-08505, manufactured by Nippon Nyukazai Co., Ltd., HLB = 10.0
Nonionic surfactant (D-9): Polyoxyethylene polyoxypropylene alkyl ether, PBC-44, manufactured by Nikko Chemicals Co., Ltd., HLB = 12.5
Nonionic surfactant (D-10): Polyoxyethylene polyoxypropylene butyl ether, TOXIMUL 8315, manufactured by STEPAN Company, HLB = 13
Nonionic surfactant (D-11): Polyoxyethylene castor oil, TERMUL1284, manufactured by Huntsman Corporation, HLB = 12.6
Nonionic surfactant (D-12): Polyoxyethylene alkyl allyl ether, Newcol 560, manufactured by Nippon Nyukazai Co. HLB = 10.9
Nonionic surfactant (D-13): Sorbitan oleate, Newcol 80, manufactured by Nippon Nyukazai Co., Ltd., HLB = 6.4
Nonionic surfactant (D-14): Sorbitan fatty acid ester, SL-10, manufactured by Nikko Chemicals Co., Ltd., HLB = 8.6
Nonionic surfactant (D-15): Sucrose stearate, DK ester F-70, manufactured by TOHO Chemical Industry Co., Ltd., HLB = 8
Nonionic surfactant (D-16): Sucrose stearate, DK ester F-110, manufactured by TOHO Chemical Industry Co., Ltd., HLB = 11
Nonionic surfactant (D-17): Sucrose stearate, DK ester F-160, manufactured by TOHO Chemical Industry Co., Ltd., HLB = 15
Nonionic Surfactant (D-18): Polymeric Ester, ATLOX 4916, manufactured by CRODA Corporation, HLB = 6
Nonionic surfactant (D-19): Fatty acid glycol ester, TG-30, manufactured by TAKEMOTO OIL & FAT Co., Ltd., HLB = 6.1
Nonionic surfactant (D-20): Alcohol Alkoxylate, TERMUL 5500, manufactured by Huntsman Corporation, HLB = 14.5
Anionic surfactant (E-1): Dodecylbenzenesulfonic acid Ca salt (21.8%) / solvent naphtha, 14179 TX, manufactured by TAKEMOTO OIL & FAT Co., Ltd.
Anionic surfactant (E-2): Dioctylsulfosuccinic acid Mg salt (61. 4%) / solvent naphtha, 14178 TX, manufactured by TAKEMOTO OIL & FAT Co., Ltd.

Example 1

Agrochemical emulsifiable concentrate composition 1 was obtained by simultaneously mixing 20 parts by mass of agrochemically active ingredient (A-1), 35 parts by mass of non-polar solvent (B-1), 30 parts by mass of polar solvent (C-1), and 15 parts by mass of nonionic surfactant (D-1) until a uniform composition could be obtained. The evaluation results are shown in Table 1.

Example 2

Agrochemical emulsifiable concentrate composition 2 was obtained in the same manner as that described in Example 1, with the exception that the amount of the nonpolar solvent (B-1) was replaced with 30 parts by mass, and the amount of the nonionic surfactant (D-1) was replaced with 20 parts by mass. The evaluation results are shown in Table 1.

Examples 3 to 6

Agrochemical emulsifiable concentrate compositions 3 to 6 were obtained in the same manner as that described in Example 1, with the exception that the nonpolar solvent (B-1) was replaced with the nonpolar solvent (B-2) to nonpolar solvent (B-5), respectively. The evaluation results are shown in Table 1.

Examples 7 to 26

Agrochemical emulsifiable concentrate compositions 7 to 26 were obtained in the same manner as that described in Example 1, with the exception that the polar solvent (C-1) was replaced with the polar solvent (C-2) to polar solvent (C-21), respectively. The evaluation results are shown in Tables 1 and 2.

[Table 1]

| | Example | | | | | | | | | | | | |
|---|---|---|---|---|---|---|---|---|---|---|---|---|---|
| | 1 | 2 | 3 | 4 | 5 | 6 | 7 | 8 | 9 | 10 | 11 | 12 | 13 |
| Composition | 1 | 2 | 3 | 4 | 5 | 6 | 7 | 8 | 9 | 10 | 11 | 12 | 13 |
| Agrochemically active ingredient (A) | | | | | | | | | | | | | |
| A-1 | 20 | 20 | 20 | 20 | 20 | 20 | 20 | 20 | 20 | 20 | 20 | 20 | 20 |
| Non-polar solvent (B) | | | | | | | | | | | | | |
| B-1 | 35 | 30 | | | | | 35 | 35 | 35 | 35 | 35 | 35 | 35 |
| B-2 | | | 35 | | | | | | | | | | |
| B-3 | | | | 35 | | | | | | | | | |
| B-4 | | | | | 35 | | | | | | | | |
| B-5 | | | | | | 35 | | | | | | | |
| Polar solvent (C) | | | | | | | | | | | | | |
| C-1 | 30 | 30 | 30 | 30 | 30 | 30 | | | | | | | |
| C-2 | | | | | | | 30 | | | | | | |
| C-3 | | | | | | | | 30 | | | | | |
| C-4 | | | | | | | | | 30 | | | | |
| C-5 | | | | | | | | | | 30 | | | |
| C-6 | | | | | | | | | | | 30 | | |
| C-7 | | | | | | | | | | | | 30 | |
| C-8 | | | | | | | | | | | | | 30 |
| Nonionic surfactant (D) | | | | | | | | | | | | | |
| D-1 | 15 | 20 | 15 | 15 | 15 | 15 | 15 | 15 | 15 | 15 | 15 | 15 | 15 |
| (A + B) / (C + D) | 1.22 | 1.00 | 1.22 | 1.22 | 1.22 | 1.22 | 1.22 | 1.22 | 1.22 | 1.22 | 1.22 | 1.22 | 1.22 |
| Evaluation results | | | | | | | | | | | | | |
| Initial emulsification | ○ | ○ | ○ | ○ | ○ | ○ | ○ | ○ | ○ | ○ | ○ | ○ | ○ |
| After 24 hours | ○ | ○ | ○ | ○ | ○ | Δ | ○ | ○ | ○ | ○ | ○ | ○ | ○ |

[Table 2]

| | Example | | | | | | | | | | | | |
|---|---|---|---|---|---|---|---|---|---|---|---|---|---|
| | 14 | 15 | 16 | 17 | 18 | 19 | 20 | 21 | 22 | 23 | 24 | 25 | 26 |
| Composition | 14 | 15 | 16 | 17 | 18 | 19 | 20 | 21 | 22 | 23 | 24 | 25 | 26 |
| Agrochemically active ingredient (A) | | | | | | | | | | | | | |
| A-1 | 20 | 20 | 20 | 20 | 20 | 20 | 20 | 20 | 20 | 20 | 20 | 20 | 20 |
| Non-polar solvent (B) | | | | | | | | | | | | | |
| B-1 | 35 | 35 | 35 | 35 | 35 | 35 | 35 | 35 | 35 | 35 | 35 | 35 | 35 |
| Polar solvent (C) | | | | | | | | | | | | | |
| C-9 | 30 | | | | | | | | | | | | |
| C-10 | | 30 | | | | | | | | | | | |
| C-11 | | | 30 | | | | | | | | | | |
| C-12 | | | | 30 | | | | | | | | | |
| C-13 | | | | | 30 | | | | | | | | |
| C-14 | | | | | | 30 | | | | | | | |
| C-15 | | | | | | | 30 | | | | | | |
| C-16 | | | | | | | | 30 | | | | | |
| C-17 | | | | | | | | | 30 | | | | |
| C-18 | | | | | | | | | | 30 | | | |
| C-19 | | | | | | | | | | | 30 | | |
| C-20 | | | | | | | | | | | | 30 | |
| C-21 | | | | | | | | | | | | | 30 |
| Nonionic surfactant (D) | | | | | | | | | | | | | |
| D-1 | 15 | 15 | 15 | 15 | 15 | 15 | 15 | 15 | 15 | 15 | 15 | 15 | 15 |
| (A + B) / (C + D) | 1.22 | 1.22 | 1.22 | 1.22 | 1.22 | 1.22 | 1.22 | 1.22 | 1.22 | 1.22 | 1.22 | 1.22 | 1.22 |
| Evaluation results | | | | | | | | | | | | | |
| Initial emulsification | ○ | ○ | ○ | ○ | ○ | ○ | ○ | ○ | ○ | ○ | ○ | ○ | ○ |

(continued)

| Evaluation results | | | | | | | | | | | | | |
|---|---|---|---|---|---|---|---|---|---|---|---|---|---|
| After 24 hours | ○ | ○ | ○ | Δ | Δ | Δ | ○ | Δ | ○ | ○ | ○ | ○ | ○ |

Examples 27 to 36

The agrochemical emulsifiable concentrate compositions 27 to 36 were obtained in the same manner as that described in Example 1, with the exception that the nonionic surfactant (D-1) was replaced with the nonionic surfactant (D-2) to the nonionic surfactant (D-11), respectively. The evaluation results are shown in Table 3.

Example 37

Agrochemical emulsifiable concentrate composition 37 was obtained in the same manner as that described in Example 1, with the exception that the amount of the agrochemically active ingredient (A-1) was replaced with 25 parts by mass, and the amount of the nonpolar solvent (B-1) was replaced with 30 parts by mass. The evaluation results are shown in Table 3.

Example 38

Agrochemical emulsifiable concentrate composition 38 was obtained in the same manner as that described in Example 1, with the exception that the amount of the nonpolar solvent (B-1) was replaced with 40 parts by mass, and the amount of the polar solvent (C-1) was replaced with 25 parts by mass. The evaluation results are shown in Table 3.

[Table 3]

| | Example | | | | | | | | | | | |
|---|---|---|---|---|---|---|---|---|---|---|---|---|
| | 27 | 28 | 29 | 30 | 31 | 32 | 33 | 34 | 35 | 36 | 37 | 38 |
| Composition | 27 | 28 | 29 | 30 | 31 | 32 | 33 | 34 | 35 | 36 | 37 | 38 |
| Agrochemically active ingredient (A) | | | | | | | | | | | | |
| A-1 | 20 | 20 | 20 | 20 | 20 | 20 | 20 | 20 | 20 | 20 | 25 | 20 |
| Non-polar solvent (B) | | | | | | | | | | | | |
| B-1 | 35 | 35 | 35 | 35 | 35 | 35 | 35 | 35 | 35 | 35 | 30 | 40 |
| Polar solvent (C) | | | | | | | | | | | | |
| C-1 | 30 | 30 | 30 | 30 | 30 | 30 | 30 | 30 | 30 | 30 | 30 | 25 |
| Nonionic surfactant (D) | | | | | | | | | | | | |
| D-1 | | | | | | | | | | | 15 | 15 |
| D-2 | 15 | | | | | | | | | | | |
| D-3 | | 15 | | | | | | | | | | |
| D-4 | | | 15 | | | | | | | | | |
| D-5 | | | | 15 | | | | | | | | |
| D-6 | | | | | 15 | | | | | | | |
| D-7 | | | | | | 15 | | | | | | |
| D-8 | | | | | | | 15 | | | | | |
| D-9 | | | | | | | | 15 | | | | |
| D-10 | | | | | | | | | 15 | | | |
| D-11 | | | | | | | | | | 15 | | |
| (A + B) / (C + D) | 1.22 | 1.22 | 1.22 | 1.22 | 1.22 | 1.22 | 1.22 | 1.22 | 1.22 | 1.22 | 1.22 | 1.50 |

(continued)

| | | | | | | | | | | | | |
|---|---|---|---|---|---|---|---|---|---|---|---|---|
| Nonionic surfactant (D) | | | | | | | | | | | | |
| Evaluation results | | | | | | | | | | | | |
| Initial emulsification | ○ | ○ | ○ | ○ | ○ | ○ | ○ | ○ | ○ | ○ | ○ | ○ |
| After 24 hours | ○ | Δ | ○ | ○ | ○ | Δ | ○ | Δ | ○ | Δ | ○ | ○ |

Comparative Example 1

Agrochemical emulsifiable concentrate composition 39 was obtained by mixing 30 parts by mass of agrochemically active ingredient (A-1), 33 parts by mass of non-polar solvent (B-2), 30 parts by mass of polar solvent (C-2), and 7 parts by mass of nonionic surfactant (D-12) until a uniform composition could be obtained. The evaluation results are shown in Table 4.

Comparative Examples 2 to 26

Agrochemical emulsifiable concentrate compositions 40 to 64 were obtained in the same manner as that described in Example 1, with the exception that the component composition was replaced with the component compositions shown in Table 4 and Table 5, respectively. The evaluation results are shown in Table 4 and Table 5.

[Table 4]

| | Comparative Example | | | | | | | | | | | | |
|---|---|---|---|---|---|---|---|---|---|---|---|---|---|
| | 1 | 12 | 3 | 4 | 5 | 6 | 7 | 8 | 9 | 10 | 11 | 12 | 13 |
| Composition | 39 | 40 | 41 | 42 | 43 | 44 | 45 | 46 | 47 | 48 | 49 | 50 | 51 |
| Agrochemically active ingredient (A) | | | | | | | | | | | | | |
| A-1 | 30 | 20 | 20 | 20 | 20 | 20 | 20 | 20 | 20 | 20 | 20 | 20 | 20 |
| Non-polar solvent (B) | | | | | | | | | | | | | |
| B-1 | | 35 | 64 | 35 | 64 | | | | | 65 | 35 | 35 | 35 |
| B-2 | 33 | | | | | | | | | | | | |
| Polar solvent (C) | | | | | | | | | | | | | |
| C-1 | | | | | | | | | 65 | | | | |
| C-2 | 30 | | | | | | | 65 | | | | | |
| C-6 | | | | | | 65 | | | | | | | |
| C-8 | | | | | | | 65 | | | | | | |
| C-22 | | | | | | | | | | | 30 | | |
| C-23 | | | | | | | | | | | | 30 | |
| C-24 | | | | | | | | | | | | | 30 |
| Nonionic surfactant (D) | | | | | | | | | | | | | |
| D-1 | | 15 | 15 | 15 | 15 | 15 | 15 | 15 | 15 | 15 | 15 | 15 | 15 |
| D-12 | 7 | | | | | | | | | | | | |
| Anionic surfactant (E) | | | | | | | | | | | | | |
| E-1 | | 30 | 1 | | 1 | | | | | | | | |
| E-2 | | | | 30 | | | | | | | | | |
| (A + B) / (C + D) | 1.70 | 1.22 | 5.60 | 3.60 | 5.60 | 0.25 | 0.25 | 0.25 | 0.25 | 5.67 | 1.22 | 1.22 | 1.22 |
| Evaluation results | | | | | | | | | | | | | |
| Initial emulsification | X | X | ○ | ○ | X | ○ | X | X | X | X | ○ | ○ | X |
| After 24 hours | X | X | X | X | X | X | X | X | X | X | X | X | X |

[Table 5]

| | Comparative Example | | | | | | | | | | | | |
|---|---|---|---|---|---|---|---|---|---|---|---|---|---|
| | 14 | 15 | 16 | 17 | 18 | 19 | 20 | 21 | 22 | 23 | 24 | 25 | 26 |
| Composition | 52 | 53 | 54 | 55 | 56 | 57 | 58 | 59 | 60 | 61 | 62 | 63 | 64 |
| Agrochemically active ingredient (A) | | | | | | | | | | | | | |
| A-1 | 20 | 20 | 20 | 20 | 20 | 20 | 20 | 20 | 20 | 20 | 20 | 20 | 20 |
| Non-polar solvent (B) | | | | | | | | | | | | | |
| B-1 | 35 | 35 | 35 | 35 | 35 | 35 | 35 | 35 | 35 | 35 | 35 | 35 | 45 |
| Polar solvent (C) | | | | | | | | | | | | | |
| C-1 | | | | | 30 | 30 | 30 | 30 | 30 | 30 | 30 | 30 | 20 |
| C-25 | 30 | | | | | | | | | | | | |
| C-26 | | 30 | | | | | | | | | | | |
| C-27 | | | 30 | | | | | | | | | | |
| C-28 | | | | 30 | | | | | | | | | |
| Nonionic surfactant (D) | | | | | | | | | | | | | |
| D-1 | 15 | 15 | 15 | 15 | | | | | | | | | 15 |
| D-13 | | | | | 15 | | | | | | | | |
| D-14 | | | | | | 15 | | | | | | | |
| D-15 | | | | | | | 15 | | | | | | |
| D-16 | | | | | | | | 15 | | | | | |
| D-17 | | | | | | | | | 15 | | | | |
| D-18 | | | | | | | | | | 15 | | | |
| D-19 | | | | | | | | | | | 15 | | |
| D-20 | | | | | | | | | | | | 15 | |
| (A + B)/ (C + D) | 1.22 | 1.22 | 1.22 | 1.22 | 1.22 | 1.22 | 1.22 | 1.22 | 1.22 | 1.22 | 1.22 | 1.22 | 1.86 |
| Evaluation results | | | | | | | | | | | | | |
| Initial emulsification | X | X | ○ | ○ | ○ | X | X | X | X | X | X | X | ○ |

(continued)

| Nonionic surfactant (D) | | | | | | | | | | | | | |
|---|---|---|---|---|---|---|---|---|---|---|---|---|---|
| After 24 hours | X | X | X | X | X | X | X | X | X | X | X | X | X |

As shown in the results described above, according to an agrochemical emulsifiable concentrate composition containing an agrochemically active ingredient, a nonpolar solvent, a polar solvent with a LogPow value of 1.6 or less, and a nonionic surfactant having a polyoxyethylene group, in which a total amount of the agrochemically active ingredient and the nonpolar solvent ranges from 1.0 to 1.6 parts by weight with respect to 1 part by weight of a total amount of the polar solvent having a LogPow value of 1.6 or less and the nonionic surfactant having a polyoxyethylene group, and an anionic surfactant is not substantially contained, a good emulsifying property can be exhibited even in the case where the composition is diluted with water having a high hardness level.

INDUSTRIAL APPLICABILITY

The agrochemical emulsifiable concentrate composition of the present invention can obtain a good emulsifying property even in the case of being diluted with water having a high hardness level. It is difficult for the diluted liquid to separate into an aqueous phase and an oil phase. For this reason, the agrochemical emulsifiable concentrate composition can be applied to agricultural and horticultural crops, fields, and the like, at a uniform concentration, and in addition, it is not necessary to carry out stirring in order to make the diluted liquid uniform during application. The concentration of the applied dilution of the composition is uniform without unevenness, and for this reason, the effects of controlling harmful organisms with respect to agricultural and horticultural crops can be uniformly exhibited.

## Claims

1. An agrochemical emulsifiable concentrate composition comprising an agrochemically active ingredient, a nonpolar solvent, a polar solvent having a LogPow value of 1.6 or less, and a nonionic surfactant having a polyoxyethylene group,
wherein a total amount of the agrochemically active ingredient and the nonpolar solvent ranges from 1.0 to 1.6 parts by weight with respect to 1 part by weight of a total amount of the polar solvent having a LogPow value of 1.6 or less and the nonionic surfactant having a polyoxyethylene group, and
an anionic surfactant is not substantially contained.

2. The agrochemical emulsifiable concentrate composition according to Claim 1, wherein the agrochemically active ingredient is acynonapyr.

3. The agrochemical emulsifiable concentrate composition according to Claim 1 or 2, wherein the polar solvent is at least one solvent selected from the group consisting of diethylene glycol monomethyl ether, N,N-dimethylformamide, dipropylene glycol n-butyl ether, cyclohexanol, cyclohexanone, butyl diglycol, tripropylene glycol methyl ether, ethanol, propylene glycol monomethyl ether, N-methyl-2-pyrrolidone, dipropylene glycol methyl ether, propylene carbonate, gamma-butyrolactone, dimethyl sulfoxide, dipropylene glycol, N-butylpyrrolidone, benzyl glycol, phenoxyethanol, phenoxypropanol, and 5-(dimethylamino) -2-methyl-5-oxopentanoic acid methyl ester.

4. The agrochemical emulsifiable concentrate composition according to any one of Claim 1 to 3, wherein the nonpolar solvent has a LogPow value that is larger than 1.6.

5. The agrochemical emulsifiable concentrate composition according to any one of Claim 1 to 4, wherein the nonionic surfactant having a polyoxyethylene group has an HLB ranging from 9 to 14.

6. The agrochemical emulsifiable concentrate composition according to any one of Claim 1 to 5, wherein the nonionic surfactant having a polyoxyethylene group is at least one surfactant selected from the group consisting of polyoxyethylene tridecyl ether, polyoxyethylene tristyryl phenyl ether, polyoxyethylene sorbitol tetraoleate, polyoxyethylene sorbitan ester, polyoxyethylene alkyl ether, polyoxyethylene polycyclic phenyl ether, polyoxyethylene oleic ester, polyoxyethylene polyoxypropylene alkyl ether, polyoxyethylene polyoxypropylene butyl ether, polyoxyethylene castor oil, and ethoxylated propoxylated tristyrylphenol.

## INTERNATIONAL SEARCH REPORT

International application No. PCT/JP2018/038824

A. CLASSIFICATION OF SUBJECT MATTER
Int. Cl. A01N25/04(2006.01)i, A01N43/90(2006.01)i, A01P7/02(2006.01)i

According to International Patent Classification (IPC) or to both national classification and IPC

B. FIELDS SEARCHED

Minimum documentation searched (classification system followed by classification symbols)
Int. Cl. A01N25/04, A01N43/90, A01P7/02

Documentation searched other than minimum documentation to the extent that such documents are included in the fields searched
Published examined utility model applications of Japan 1922-1996
Published unexamined utility model applications of Japan 1971-2018
Registered utility model specifications of Japan 1996-2018
Published registered utility model applications of Japan 1994-2018

Electronic data base consulted during the international search (name of data base and, where practicable, search terms used)
JSTPlus/JMEDPlus/JST7580 (JDreamIII), CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| X<br>Y | WO 2009/063608 A1 (NIPPON SODA CO., LTD.) 22 May 2009, claims, examples & JP 2013-224333 A & US 2010/0234232 A1, claims, examples & EP 2216092 A1 & CN 101855009 A & BR PI0820200 A & KR 10-2010-0084654 A & ES 2577457 T & PL 2216092 T | 1, 3-6<br>2 |
| Y<br>A | WO 2016/133011 A1 (NIPPON SODA CO., LTD.) 25 August 2016, paragraph [0033], examples & US 2018/0014543 A1, paragraph [0115], examples & EP 3259992 A1 & CA 2975982 A & CN 107205396 A & KR 10-2017-0102993 A & EA 201791584 A & MX 2017010381 A & BR 112017016996 A & TW 201632064 A & PE 17352017 A & CL 2017001967 A | 2<br>1, 3-6 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 14.12.2018 | 25.12.2018 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No. PCT/JP2018/038824

C (Continuation). DOCUMENTS CONSIDERED TO BE RELEVANT

| Category* | Citation of document, with indication, where appropriate, of the relevant passages | Relevant to claim No. |
|---|---|---|
| X<br>A | JP 2003-128501 A (NISSAN CHEMICAL INDUSTRIES, LTD.) 08 May 2003, claims, examples, paragraph [0033] & US 2003/0083201 A1, claims, examples, paragraph [0040] & AU 2002301490 B | 1, 3-6<br>2 |
| A | JP 2008-150346 A (SUMITOMO CHEMICAL CO., LTD.) 03 July 2008 & US 2008/0153884 A1 & FR 2910240 A & BR PI0704844 A & ES 2323116 A & ZA 200711129 A & IT 7020070903 A & IL 188060 A & TR 200708875 A & AU 2007242950 A & TW 200829160 A & IT 7020070903 A1 | 1-6 |
| A | JP 7-179301 A (ROHM AND HAAS COMPANY) 18 July 1995 & US 5444078 A & EP 648414 A2 & DE 69421667 T & NZ 264570 A & AU 7426194 A & HU 69029 A & ZA 9407562 A & AT 186623 T & CA 2133056 A & IL 111096 D & ES 2139715 T & SG 67907 A & CN 1107289 A & AU 680288 B & KR 10-0354634 B & IL 111096 DO | 1-6 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2017209304 A
- WO 2011105506 A
- WO 2009063608 A